# FASCICULE DE BREVET EUROPEEN

(11) **EP 0 749 921 B1**
(45) Date de publication et mention de la délivrance du brevet: **24.03.1999**
(21) Numéro de dépôt: 96401368.4
(22) Date de dépôt: 21.06.1996
(51) Int. Cl.: B65G 49/06, B66C 23/48

(54) **Pupitre destiné au transport, au stockage, à la manutention et à la pose d'éléments verticaux et plats**
Rollgestell zum Transportieren, Lagern, Handhaben und Einbauen von vertikalen und flachen Elementen
Dolly for transporting, stacking, handling and mounting of vertical and flat elements

(30) Priorité: 22.06.1995 FR 9507475
(43) Date de publication de la demande: 27.12.1996
(73) Titulaire: Fraigneau, Denis Charles Paul, 78150 Rocquencourt (FR)
(72) Inventeur: Fraigneau, Denis Charles Paul, 78150 Rocquencourt (FR)
(74) Mandataire: de Saint-Palais, Arnaud Marie

(56) Documents cités:
- DE-A- 4 041 622
- US-A- 3 765 550

## Description

La présente invention concerne un appareil dit "pupitre" destiné au transport, au stockage, à la manutention et à la pose sans manipulation, d'éléments et plats, éventuellement encombrants et lourds, tels que des produits verriers, métalliers et publicitaires, ledit appareil comprenant les caractéristiques structurelles selon le préambule de la revendication 1. Un tel pupitre est connu, par exemple, du document US-A-3765550.

D'une manière générale, on sait que pour effectuer le transport de produits de ce genre, en particulier de produits vitriers, on utilise des fourgonnettes de type classique dont au moins un côté latéral est équipé d'un pupitre fixe, indissociable du véhicule porteur.

Habituellement, ce pupitre est composé d'une série d'éléments profilés verticaux disposés parallèlement les uns aux autres de manière à constituer une face d'appui ajourée rectangulaire, verticale ou faiblement inclinée par rapport à la verticale. Ces éléments profilés sont solidarisés par des traverses, l'ensemble étant fixé à l'aide de moyens classiques. La bordure inférieure de la face d'appui est munie d'une tablette d'appui horizontale sur laquelle les produits vitriers viennent porter et sont supportés par leurs tranches.

Il s'avère que ces pupitres présentent l'inconvénient de nécessiter des opérations de chargement et de déchargement particulièrement délicates et dangereuses des produits verriers. En fait, ces opérations de manutention nécessitent l'intervention de plusieurs personnes. Elles sont pénibles et dangereuses tant en ce qui concerne les risques de bris que les risques de blessures.

L'invention a donc plus particulièrement pour but la conception d'un pupitre permettant de faciliter la manutention des éléments à transporter ainsi, qu'éventuellement, les opérations de pose de ces éléments, en réduisant autant que possible les risques de détérioration, voire de bris de ces éléments et les risques de blessure des opérateurs.

Pour parvenir à ces résultats, elle propose un pupitre amovible mobile indépendamment du véhicule sur lequel il vient se fixer de façon déconnectable, ce pupitre comprenant au moins un cadre principal présentant une face plane sensiblement verticale destinée à servir d'appui dans un plan vertical des éléments à transporter, des moyens de roulement au sol équipant la partie inférieure dudit cadre pour assurer sa mobilité et des premiers moyens d'accrochage et de fixation aptes à se fixer sur des seconds moyens de fixation correspondants montés sur le véhicule et des moyens permettant de déplacer verticalement au moins les premiers ou les seconds moyens d'accrochage de manière à pouvoir passer d'une position d'engagement dans laquelle les moyens d'accrochage d'un même couple se trouvent à une même hauteur, les moyens de roulement étant en appui sur le sol, à une position suspendue dans laquelle le cadre et ses moyens de roulement sont suspendus au-dessus du sol et peuvent être verrouillés sur le véhicule.

Avantageusement, le pupitre pourra comprendre un cadre secondaire monté coulissant sur le cadre principal et comprenant des moyens de support des éléments à transporter. Dans ce cas, les susdits premiers moyens d'accrochage sont montés de préférence dans la partie supérieure du cadre secondaire. Des moyens sont en outre prévus pour engendrer un coulissement du cadre secondaire par rapport au cadre principal et inversement.

Grâce à ces dispositions, le pupitre peut être ôté du véhicule et amené en roulant jusqu'au poste de stockage des éléments à transporter. Le chargement peut alors être effectué de la même façon que si l'on disposait d'un transporteur élévateur à fourche, l'ensemble cadre secondaire/moyens de support jouant alors le rôle de la fourche.

Une fois chargé, le pupitre peut être ramené au véhicule par roulage puis disposé de manière à ce que les premiers moyens d'accrochage viennent en coïncidence avec les deuxièmes moyens. Par un déplacement relatif des deux cadres, on provoque un soulèvement du cadre principal jusqu'à ce que l'ensemble du pupitre se trouve suspendu sur les premiers moyens d'accrochage.

L'opérateur peut alors verrouiller le pupitre sur le véhicule puis provoquer un escamotage éventuel des roues.

Arrivé à sa destination, par un processus inverse, le pupitre peut être décroché du véhicule et amené par roulage jusqu'au lieu d'utilisation. Pour le déchargement, il peut être utilisé de la même façon qu'un transporteur élévateur.

Des modes d'exécution de l'invention seront décrits ci-après, à titre d'exemples non limitatifs, avec référence aux dessins annexés dans lesquels :

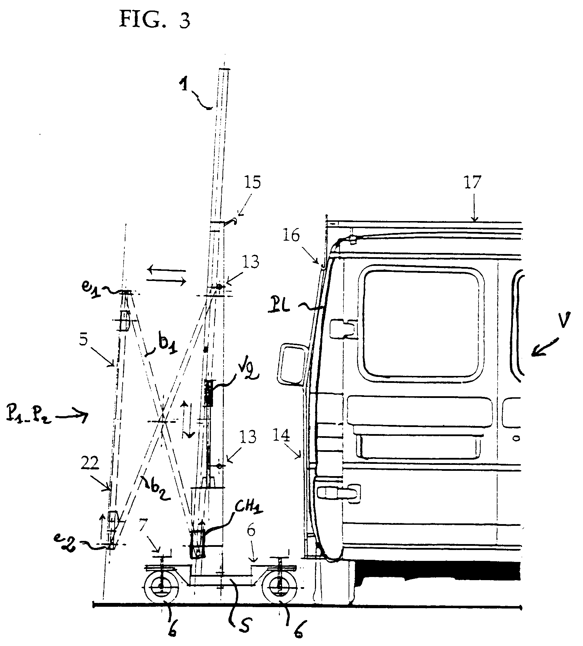

Les figures 1 à 3 sont des vues représentant un premier mode d'exécution d'un pupitre, en élévation (figure 1), vu de dessus (figure 2) et vu de côté face à un véhicule (figure 3) ;
La figure 4 est une vue en perspective d'un dispositif de support mobile équipant un montant du cadre secondaire du pupitre représenté sur les figures 1 à 3.

Tel que représenté sur ces figures, le pupitre se présente sous l'apparence d'une structure de forme rectangulaire légèrement inclinée par rapport à la verticale.

Cette structure comprend un cadre principal rectangulaire 1 dans lequel coulisse, grâce à des glissières verticales G₁, G₂, un cadre secondaire 2 également rectangulaire, de même longueur que le premier mais de hauteur inférieure. La translation de ce cadre secondaire 2 est assurée par l'action d'au moins un vérin hydraulique à double effet V₁ prenant appui sur le longeron inférieur L₁ du cadre principal 1 et dont la tige est solidarisée à un longeron supérieur L₂ du cadre secondaire 2.

Comme précédemment mentionné, ce mécanisme permet l'accrochage du pupitre au véhicule ainsi que l'élévation des charges transportées notamment lors du chargement, du déchargement ou de la pose.

Par ailleurs, le cadre secondaire 2 comprend, dans sa région centrale, deux traverses verticales T₁, T₂ sur lesquelles vient s'articuler deux pantographes articulés parallèles P₁, P₂ conçus pour se déployer selon un axe horizontal.

Chacun de ces pantographes P₁, P₂ comprend un bras vertical 5 mobile en translation dont une première extrémité e₁ est articulée à l'une des extrémités d'une biellette b₁ dont l'autre extrémité est elle-même articulée sur un chariot CH₁ qui coulisse le long de la traverse T₁, T₂, sensiblement à hauteur de la seconde extrémité e₂ du bras 5.

Cette seconde extrémité e₂ comprend une glissière le long de laquelle coulisse l'une des extrémités d'une deuxième biellette b₂ dont l'autre extrémité vient s'articuler sur la traverse T₁, T₂ sensiblement à hauteur de l'extrémité e₁ du bras 5.

Un vérin hydraulique à double effet V₂ prenant appui sur chaque chariot CH₁ (ou sur une pièce de liaison reliant les deux chariots) permet de provoquer le déploiement ou la rétraction des deux pantographes P₁, P₂.

Les deux bras 5 sont assemblés l'un à l'autre de façon à constituer un cadre rectangulaire rigide destiné à recevoir, selon la nature des charges translatées, des ventouses (pour les produits verriers) ou tout autre système d'accrochage (pour les autres produits).

Ce mécanisme à pantographes permet la translation horizontale, par exemple sur 0,5m maximum, des charges transportées vers le lieu de pose, perpendiculairement au pupitre.

Le poids résultant du portage des charges en porte-à-faux aux extrémités des bras peut être compensé, à l'opposé, par des contrepoids placés à l'arrière et en partie basse du pupitre.

L'actionnement des vérins peut s'effectuer manuellement ou électriquement.

Le pupitre repose, par sa base, sur deux supports de roulement S, montés de façon escamotable dans l'épaisseur du cadre principal et sous lesquels sont fixées quatre roulettes orientables 6, permettant son déplacement au sol.

Pour l'immobilisation complète du pupitre au sol, les roulettes 6 placées du côté sur lequel sont transportées les charges sont équipées d'un frein.

Par ailleurs, pour obtenir le calage à niveau du pupitre durant son immobilisation au sol, chaque support de roulement S est équipé d'un vérin vertical constitué d'une vis 7.

Le blocage des supports de roulement S dans leur position au sol est obtenu grâne à une tige verticale surmontée d'une poignée 8 et munie d'un ressort de rappel, l'ensemble étant fixé sur le montant droit du cadre principal. Par simple rotation d'un quart de tour de cette poignée 8, l'extrémité de la tige pénètre automatiquement dans un cran situé sur le dessus de la plaque support de fixation de la roulette droite.

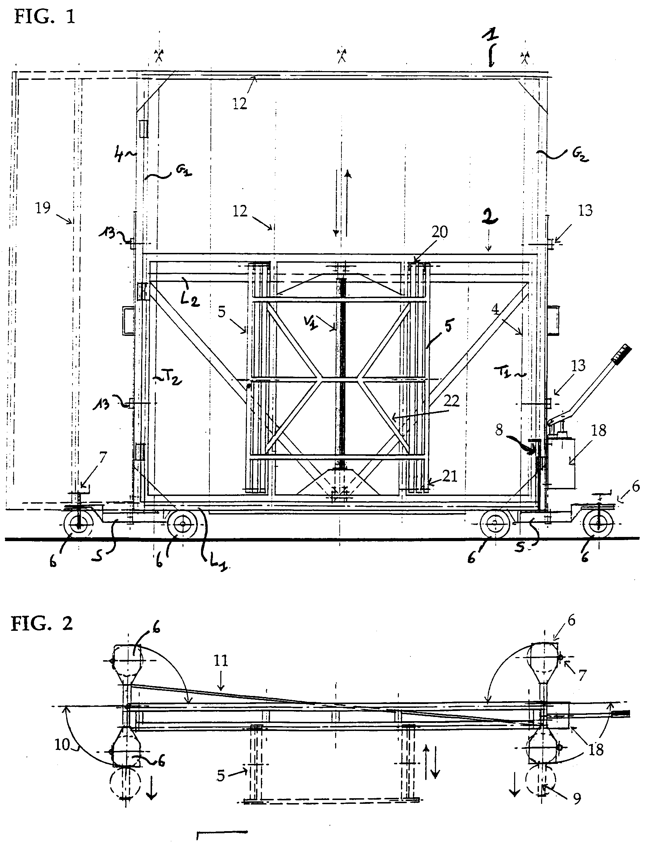

L'extension manuelle, vers l'avant, des deux supports de roulement télescopiques S comportant les roulettes équipées d'un frein 9 (figure 2), permet d'accroître la stabilité du pupitre, ainsi que son maintien dans le polygone de sustentation durant ses évolutions au sol, notamment au moment de sa séparation du véhicule porteur et de sa dépose sur un sol dénivelé ou instable.

Durant le transport du pupitre par le véhicule porteur, les deux supports de roulement S sont escamotés manuellement dans l'épaisseur du cadre principal 1, par rotations horizontales simultanées dans le sens des flèches 10 (figure 2). Ce mouvement est réalisé au moyen d'une tige 11 qui les relie en diagonale.

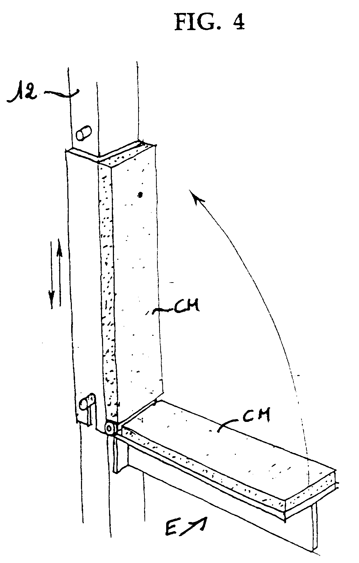

Pour une répartition rationnelle des charges transportées et leur maintien, le cadre secondaire 2 comporte des équerres amovibles et rabattables E (figure 4), disposées sur des réglettes-supports horizontales et verticales 12 (figure 1). Les parties porteuses des équerres E et des réglettes 12 sont recouvertes de bandes protectrices en caoutchouc mousse CM.

La translation du pupitre sur la paroi latérale PL du véhicule porteur V est assurée par quatre galets 13, placés latéralement en haut et en bas du cadre principal 1. Ils coulissent verticalement sur des glissières 14 fixées le long de la paroi latérale PL du véhicule porteur V.

Ces quatre galets 13 viennent se placer dans des logements intégrés aux glissières verticales 14, lors de l'accrochage du pupitre sur le véhicule porteur V. Ce système constitue une sécurité supplémentaire durant le transport du pupitre sur le véhicule porteur, en empêchant son dévers.

La fixation du pupitre sur le véhicule porteur est assurée par deux ou quatre crochets mâles 15 (selon la longueur du pupitre) articulés et situés latéralement en partie supérieure du cadre secondaire 2. Ils permettent son accrochage sur le véhicule porteur V muni, selon le cas, de deux ou quatre crochets femelles fixes 16, solidaires de la galerie 17 placée sur le dessus du véhicule V.

Cette mise en place du pupitre sur le véhicule V porteur s'effectue en trois temps :

Tout d'abord, on procède au plaquage du pupitre contre la paroi latérale du véhicule porteur V.

On effectue ensuite une translation verticale du cadre secondaire 2 vers le haut puis vers le bas provoquant l'enclenchement automatique des crochets mâles articulés 15 (situés aux deux extrémités hautes du cadre secondaire) dans les crochets femelles 16.

Le cadre secondaire 2 étant suspendu au véhicule porteur, le cadre principal 1 est remonté pour être dégagé du sol, plaçant ainsi le pupitre en position transport.

Deux autres crochets mâles articulés et situés latéralement en partie supérieure du cadre principal, permettent d'utiliser le pupitre, accroché au véhicule porteur, comme élévateur de charges; cette opération s'effectue en deux temps :

Tout d'abord, le cadre secondaire 2 étant déjà accroché sur le véhicule porteur V, le cadre principal 1 est translaté vers le haut puis vers le bas, pour être accroché sur deux autres crochets femelles solidaires du véhicule porteur.

Les crochets mâles 15 du cadre secondaire sont ensuite libérés de manière à autoriser ainsi sa translation verticale.

Comme précédemment mentionné, toutes les actions de levage du pupitre, selon sa longueur, sont obtenues par un ou deux vérins hydrauliques à double effet V₁, qui développent chacun une poussée pouvant atteindre une tonne.

Ces deux vérins V₁ sont situés, soit dans l'axe vertical du pupitre, position indiquée sur la figure 1, soit au droit des traverses verticales extérieures T₁, T₂ du cadre secondaire 2.

Les actions de translation horizontale des charges transportées sont obtenues par les deux vérins hydrauliques à double effet V₂ .

Tous les vérins V_{1,} V₂ sont actionnés au moyen d'une pompe hydraulique 18, à double effet et à double action, soit manuelle, soit électrique, alimentée dans ce dernier cas, par une batterie 12 volts, l'ensemble étant fixé sur le côté droit du pupitre. La pompe hydraulique 18 comporte un système antivol neutralisant toute action sur le pupitre.

La recharge de la batterie, l'alimentation du système lumineux de balisage routier et d'indication de verrouillage du pupitre sur le véhicule porteur, sont assurées, simultanément, par l'intermédiaire d'un contacteur électrique, situé à l'emplacement de l'un des quatre crochets de suspension 16.

Une extension des dimensions du pupitre, en longueur et en hauteur, peut être réalisée en fonction des besoins et de la longueur des véhicules porteurs V.

Des rallonges 19 sont alors clavetées en extrémité gauche et en partie haute du cadre secondaire 2.

Une housse plastique hermétique enveloppe intégralement le pupitre durant son transport.

Elle assure la protection des charges et écarte les risques d'accidents sur les personnes et les biens, en cas de casse.

Elle constitue, par ailleurs, un support publicitaire pour l'utilisateur du pupitre.

## Revendications

1. Pupitre mobile pour le transport, le stockage, la manutention et la pose d'éléments plats tels que des produits verriers,
comportant au moins un cadre principal (1) présentant une face plane sensiblement verticale destinée à servir d'appui dans un plan vertical à des éléments à transporter, des moyens de roulement (S, 6) au sol équipant la partie inférieure dudit cadre pour assurer sa mobilité caractérisé par des premiers moyens d'accrochage et de fixation (15) aptes à se fixer sur des seconds moyens de fixation (16) correspondants montés sur un véhicule (V) et des moyens (13, 14) permettant de déplacer verticalement au moins les premiers ou les seconds moyens d'accrochage (15, 16) de manière à pouvoir passer d'une position d'engagement dans laquelle les moyens d'accrochage (15, 16) d'un même couple se trouvent à une même hauteur, les moyens de roulement (S, 6) étant en appui sur le sol, à une position suspendue dans laquelle le cadre (1) et ses moyens de roulement (S, 6) sont suspendus au-dessus du sol et peuvent être verrouillés sur le véhicule (V).

2. Pupitre selon la revendication 1,
caractérisé en ce qu'il comprend un cadre secondaire (2) monté coulissant sur le cadre principal (1) et comprenant des moyens de support (E) des éléments à transporter.

3. Pupitre selon la revendication 2,
caractérisé en ce que des moyens (V₁) sont en outre prévus pour engendrer un coulissement du cadre secondaire (2) par rapport au cadre principal (1) et inversement.

4. Pupitre selon l'une des revendications précédentes,
caractérisé en ce qu'il comprend des moyens (11) permettant d'effectuer l'escamotage des moyens de roulement (S, 6), en position suspendue du pupitre sur le véhicule (V).

5. Pupitre selon l'une des revendications 2 à 4,
caractérisé en ce que le cadre secondaire comprend deux traverses verticales (T₁, T₂) sur lesquelles viennent s'articuler deux pantographes articulés parallèles (P₁, P₂) conçus pour se déployer selon un axe horizontal, permettant ainsi la translation horizontale des charges transportées.

6. Pupitre selon la revendication 5,
caractérisé en ce que des moyens (V₂) sont prévus pour déployer ou rétracter les pantographes (P₁, P₂).

7. Pupitre selon l'une des revendications précédentes,
caractérisé en ce que les moyens de roulement (S, 6) comprennent deux supports de roulement (S) escamotables dans l'épaisseur du cadre principal (1) et dans lesquels sont fixées des roulettes orientables (6) équipées d'un frein.

8. Pupitre selon la revendication 7,
caractérisé en ce que le blocage des supports de roulement (S) en position déployée est obtenu grâce à une tige verticale surmontée d'une poignée (8) et munie d'un ressort de rappel, l'ensemble étant fixé sur un montant du cadre principal (1), l'extrémité de la tige coopérant avec un cran situé sur le dessus d'une des plaques de support (S).

9. Pupitre selon la revendication 7 ou 8,
caractérisé en ce que les supports de roulement (S) sont télescopiques.

10. Pupitre selon l'une des revendications 7 à 9,
caractérisé en ce que les moyens d'escamotage des moyens de roulement comprennent une tige (11) qui relie en diagonale les deux supports de roulement (S) et qui les entraîne en rotation simultanément.

11. Pupitre selon l'une des revendications 2 à 10,
caractérisé en ce que le cadre secondaire comporte des équerres (E) amovibles et rabattables, disposées sur des réglettes-supports horizontales et verticales (12) de la charge.

12. Pupitre selon l'une des revendications précédentes,
caractérisé en ce que les moyens de déplacement vertical comprennent des galets (13) placés latéralement en haut et en bas du cadre principal (1), coulissant verticalement sur des glissières (14) fixées le long de la paroi latérale (PL) du véhicule porteur (V).

13. Pupitre selon l'une des revendications 3 à 12,
caractérisé en ce que les actions de levage du pupitre et de translation horizontale des charges transportées sont obtenues au moyen de vérins hydrauliques à double effet, ces vérins étant actionnés par une pompe hydraulique à double action, soit manuelle, soit électrique.

14. Pupitre selon l'une des revendications 2 à 13,
fixé sur un véhicule porteur (V) caractérisé en ce que les premiers moyens d'accrochage sont des crochets mâles (15) articulés et placés latéralement en partie supérieur du cadre secondaire (2) et qui coopèrent avec des crochets femelles (16) fixés sur une galerie (17) placée sur le dessus du véhicule porteur (V).

## Claims

1. Mobile stand for the transportation, storage, handling and installation of flat elements such as glazing products, comprising at least one main frame (1) having a substantially vertical flat side intended to serve as a mainstay in a vertical plane for elements, a means (S, 6) for rolling on the ground fitted to the lower part of said frame to ensure the mobility thereof, characterized by a first catching and securing means (15) capable of being fastened to a corresponding second securing means (16) mounted on a vehicle (V), and a means (13, 14) enabling vertical displacement of at least the first and second catching means (15, 16) in order to be able to move from an engaged position in which the catching means (15, 16) of a same couple are at the same height, with the rolling means (S, 6) bearing on the ground, to a suspended position in which the frame (1) and its rolling means (S, 6) are suspended above the ground and can be locked onto the vehicle (V).

2. Stand as claimed in claim 1,
characterized in that it comprises a secondary frame (2) mounted slidably onto the main frame (1) and comprising a means (E) for supporting the elements to be transported.

3. Stand as claimed in claim 2,
characterized in that a means (V₁) is further provided to generate a sliding of the secondary frame (2) in relation to the main frame (1) and vice versa.

4. Stand as claimed in any one of the previous claims,
characterized in that it comprises a means (11) enabling a retraction of the rolling means (S, 6), in the suspended position of the stand on the vehicle (V).

5. Stand as claimed in any one of claims 2 to 4,
characterized in that the secondary frame comprises two vertical cross-pieces (T₁, T₂) upon which are articulated two parallel articulated pantographs (P₁, P₂) designed to be deployed according to a horizontal axis, thus enabling the loads transported to be translated horizontally.

6. Stand as claimed in claim 5,
characterized in that a means (V₂) is provided to deploy or retract the pantographs (P₁, P₂).

7. Stand as claimed in any one of the previous claims,
characterized in that the rolling means (S, 6) comprising two roll supporting brackets (S) that can be retracted into the thickness of the main frame (1) and in which are fastened small steerable wheels (6) fitted with a brake.

8. Stand as claimed in claim 7,
characterized in that the locking of the roll supporting brackets (S) into the deployed position is obtained by way of a vertical rod surmounted by a handle (8) and fitted with a return spring, the whole assembly being secured to a post of the main frame (1), the end of the rod cooperating with a notch located on top of one of the supporting plates (S).

9. Stand as claimed in claim 7 or claim 8,
characterized in that the roll supporting brackets (S) are telescopic.

10. Stand as claimed in any one of claims 7 to 9,
characterized in that the means for retracting the rolling means comprises a rod (11) which diagonally connects the two roll supporting brackets (S) and which simultaneously drives them in rotation.

11. Stand as claimed in any one of claims 2 to 10,
characterized in that the secondary frame comprises removable and foldable squares (E) arranged on horizontal and vertical load bearing strips (12).

12. Stand as claimed in any one of the previous claims,
characterized in that the vertical displacement means comprises rollers (13) positioned laterally at the top and bottom of the main frame (1), sliding vertically along sliding rails (14) fastened along the lateral wall (PL) of the carrying vehicle (V).

13. Stand as claimed in any one of claims 3 to 12,
characterized in that the raising of the stand and horizontal translation of the loads transported are performed by means of dual-action hydraulic jacks, these jacks being actuated by either a manual or an electric dual-action hydraulic pump.

14. Stand as claimed in either claim 2 or claim 13,
secured to a carrying vehicle (V), characterized in that the first catching means is male hooks (15) articulated and placed laterally on the upper part of the secondary frame (2) and which cooperate with female hooks (16) fastened to a roof rack (17) placed on top of the carrying vehicle (V).

## Patentansprüche

1. Bewegliches Pult zum Transport, zur Lagerung, zum Aufladen und zum Einbau von ebenen Bauelementen, wie z. B. Glaswaren, umfassend wenigstens einen Hauptrahmen (1), der eine ebene, im wesentlichen vertikale Fläche aufweist, die als Stütze in einer vertikalen Ebene für zu transportierende Bauelemente dienen soll, wobei der untere Teil des Rahmens mit Rollmitteln (S, 6) am Boden ausgestattet ist, um seine Beweglichkeit sicherzustellen, gekennzeichnet durch erste Verankerungs- und Befestigungsmittel (15) die dazu geeignet sind, an entsprechenden zweiten Befestigungsmitteln (16) befestigt zu werden, die auf einem Fahrzeug (V) montiert sind, und Mittel (13, 14), die eine vertikale Verschiebung wenigstens der ersten oder der zweiten Verankerungsmittel (15, 16) erlauben, um sich von einer Eingriffsposition, in der die Verankerungsmittel (15, 16) desselben Paares sich auf derselben Höhe befinden, wobei die Rollmittel (S, 6) auf dem Boden aufliegen, in eine schwebende Position zu bewegen, in der der Rahmen (1) und seine Rollmittel (S, 6) über dem Boden schweben und am Fahrzeug (V) verriegelt werden können.

2. Pult nach Anspruch 1, dadurch gekennzeichnet daß es einen weiteren Rahmen (2) umfaßt, der gleitend auf dem Hauptrahmen (1) montiert ist und Stützmittel (E) für zu transportierende Bauelemente aufweist.

3. Pult nach Anspruch 2, dadurch gekennzeichnet, daß ferner Mittel (V₁) zum Erzeugen einer Gleitbewegung des weiteren Rahmens (2) relativ zum Hauptrahmen (1), und umgekehrt, vorgesehen sind.

4. Pult nach einem der vorhergehenden Ansprüche, dadurch gekennzeichnet, daß es Mittel (11) umfaßt, die es erlauben, ein Einklappen der Rollmittel (S, 6) in die schwebende Position des Pultes auf dem Fahrzeug (V) durchzuführen.

5. Pult nach einem der Ansprüche 2 bis 4, dadurch gekennzeichnet, daß der weitere Rahmen zwei vertikale Riegel (T₁, T₂) umfaßt, auf denen zwei parallele, verschwenkbare Pantografen (P₁, P₂) verschwenkt werden können, die dazu vorgesehen sind, sich längs einer horizontalen Achse auszubreiten und somit die horizontale Verschiebung der transportierten Lasten zuzulassen.

6. Pult nach Anspruch 5, dadurch gekennzeichnet daß Mittel (V₂) Vorgesehen sind, um die Pantografen (P₁, P₂) auszufahren oder zurückzuziehen.

7. Pult nach einem der vorhergehenden Ansprüche, dadurch gekennzeichnet, daß die Rollmittel (S, 6) zwei Rollstützen (S) umfassen, die in der Dicke des Hauptrahmens (1) einklappbar sind und in denen ausrichtbare, mit einer Bremse ausgestattete Rollen (6) befestigt sind.

8. Pult nach Anspruch 7, dadurch gekennzeichnet, daß die Blockierung der Rollstützen (S) in der ausgefahrenen Position durch einen vertikalen Schalt erhältlich ist, auf dem ein Griff (8) montiert ist und der mit einer Rückstellfeder ausgestattet ist, wobei diese Einheit auf einem Vertikalstab des Hauptrahmens (1) befestigt ist und das Ende des Schaftes mit einer Einkerbung zusammenwirkt, die sich auf einer der Stützplatten (S) befindet.

9. Pult nach Anspruch 7 oder 8, dadurch gekennzeichnet, daß die Rollstützen (S) ausziehbar sind.

10. Pult nach einem der Ansprüche 7 bis 9, dadurch gekennzeichnet, daß die Mittel zum Einklappen der Rollmittel einen Schaft (11) umfassen, der die zwei Rollstützen (S) diagonal verbindet und sie gleichzeitig in Drehung versetzt.

11. Pult nach einem der Ansprüche 2 bis 10, dadurch gekennzeichnet, daß der weitere Rahmen abnehmbare und herunterklappbare Eckbleche (E) umfaßt, die auf horizontalen und vertikalen Stützleisten (12) der Last angeordnet sind.

12. Pult nach einem der vorhergehenden Ansprüche, dadurch gekennzeichnet, daß die Mittel zur vertikalen Verschiebung Rollen (13) umfassen, die oben und unten am Hauptrahmen (1) seitlich angebracht sind und vertikal auf Gleitschienen (14) gleiten, die entlang der Seitenwand (PL) des Lieferfahrzeugs (V) befestigt sind.

13. Pult nach einem der Ansprüche 3 bis 12, dadurch gekennzeichnet, daß die Vorgänge des Hebens des Pultes und der horizontalen Verschiebung der transportierten Lasten mittels doppeltwirkender hydraulischer Winden erhältlich sind, wobei diese Winden durch eine manuelle oder elektrische, doppeltwirkende hydraulische Pumpe betätigt werden.

14. Pult nach einem der Ansprüche 2 bis 13, das auf einem Lieferfahrzeug (V) befestigt ist, dadurch gekennzeichnet, daß die ersten Verankerungsmittel frei bewegliche äußere Haken (15) sind, die seitlich am oberen Teil des weiteren Rahmens (2) angeordnet sind und mit inneren Haken (16) zusammenwirken, die auf einem Dachgepäckträger (17) befestigt sind, der oben auf dem Lieferfahrzeug (V) angebracht ist.
